# EUROPÄISCHE PATENTANMELDUNG

(11) **EP 1 176 698 A2**
(43) Veröffentlichungstag der Anmeldung: **30.01.2002**
(21) Anmeldenummer: 01118043.7
(22) Anmeldetag: 25.07.2001
(51) Int. Cl.: H02K 5/08, H02K 5/15, H02K 5/10, H02K 7/14

(54) **Elektromotor**

(30) Priorität: 25.07.2000 DE 10036489
(71) Anmelder: Schulze, Eckehart, 71287 Weissach (DE); HARTMANN + LÄMMLE GMBH & CO. KG, D-71277 Rutesheim (DE)
(72) Erfinder: Schulze, Eckehart, 71287 Weissach (DE); Gessler, Frank, 72768 Reutlingen (DE)
(74) Vertreter: Lutz, Johannes Dieter, Dr.

(57) **Zusammenfassung**

Bei einem Elektromotor (10), dessen Rotor (11) in zwei Wälzlagern (26 und 29) drehbar gelagert ist, die jeweils von einer inneren bzw. äußeren zylindrisch-topfförmigen Lagerschale (24 bzw. 28) aufgenommen sind, ist der Außendurchmesser (D₄) des äußeren Lagerringes (36) des inneren Wälzlagers (26), der von einem ringzylindrischen Mantelbereich der inneren Lagerschale (24) umschlossen ist, kleiner ist als der radiale lichte Durchmesser (D₃) einer die innere Einhüllende des Statorkerns (13) bildenden Zylindermantelfläche. Die innere Lagerschale (24) ist zusammen mit dem Kern und den von diesem getragenen Feldspulen (12) außenseitig von einem als einstückiges Spritzgußteil ausgebildeten Kunststoff-Mantelteil (21) umschlossen. Die äußere Lagerschale (28) ist innerhalb einer bohrungsförmigen, kreiszylindrisch berandeten zentralen Öffnung des Kunststoff-Mantelteils, deren Durchmesser (D₂) geringfügig größer ist als der Innendurchmesser (D₃) des außen ummantelten Kerns (13) des Stators (14), mittels einer Ringdichtung (31) gegen das Kunststoff-Mantelteil (21) abgedichtet; das innere Wälzlager (26) ist als Loslager ausgebildet, dessen äußerer Lagerring (34) eine geführte axiale Verschiebbarkeit des Rotors (11) in der inneren Lagerschale (24) vermittelt.

## Beschreibung

Die Erfindung betrifft einen Elektromotor, dessen Rotor in zwei jeweils einseitig von einem die Feldspulen tragenden, magnetisch weichen, "geblechten" Statorkern angeordneten Wälzlagern drehbar gelagert ist, die von der Grundform nach zylindrisch-topfförmigen Lagerschalen aufgenommen sind, die aus nicht-magnetisierbarem, mechanisch festem Material bestehen und durch formschlüssig-zentrierenden Eingriff mit dem Statorkern und axiale Abstützung an diesem in definiertem Abstand voneinander am Stator festlegbar sind, wobei der Außendurchmesser (D₄) des äußeren Lagerringes mindestens eines der Wälzlager, der von einem ringzylindrischen Mantelbereich der zugeordneten Lagerschale umschlossen ist, kleiner ist als der radiale lichte Durchmesser (D₃) einer die innere Einhüllende des Statorkerns bildenden Zylindermantelfläche.

Motore dieser Bauweise sind z.B. die bekannten Schrittmotore (vgl. Rolf Fischer, Elektrische Maschinen, 7. Auflage, Carl-Hansser-Verlag München/Wien, Seite 335 - 339), allgemein permanent-erregte, elektronisch kommutierbare Elektromotore, aber auch Reluktanzmotore, die mit möglichst engem Luftspalt zwischen Rotor und Stator realisiert sein sollten.

In einer üblichen Bauform solcher Motore sind die zur drehbaren Lagerung des Rotors vorgesehenen Wälzlager von zentralen, stabil ausgebildeten Lagerschalenbereichen insgesamt flach-dosenförmig gestalteter Stirnwandteile aufgenommen, die an die beiden Stirnseiten des den Statorkern bildenden Blechpakets ansetzbar sind und sich mit den Stirnrändern ihrer Mantelwände, welche die Wickelköpfe der Feldspulen des Stators außenseitig umschließen an den radial äußeren Bereichen der endständigen Statorbleche abstützen. Zur Fixierung der beiden Stirnwandteile des Motors am Statorkern dienen Schraubbolzen oder Zuganker, die durch parallel zur zentralen Längsachse des Motors verlaufende Bohrungen des Statorkerns, die radial außerhalb der Wickelköpfe angeordnet sind, hindurchtreten und durch Anziehen ein- oder beidseitig angeordneter Muttern spannbar sind. Ein Motor dieser Art ist mit zumindest den folgenden Nachteilen behaftet:

Die Herstellung der Stirnwandteile ist aufgrund ihrer detailreichen komplizierten Form aufwendig und entsprechend kostenträchtig.

Damit die beiden Stirnwandteile in exakt derjenigen Position montiert werden können, daß die Drehachsen der von ihnen jeweils aufgenommenen Wälzlager exakt miteinander fluchten, ist es notwendig, daß die Endstirnflächen des Statorkerns, an denen die Stirnwandteile sich axial abstützen, exakt parallel zueinander und rechtwinklig zur zentralen Längsachse des Motors verlaufen. Dies erfordert aufgrund der geblechten Ausbildung des Kerns, die bei einfacher Stanzpakettierung desselben in der Regel nicht zu einem exakt parallelen Verlauf der äußeren Stirnbleche führt, eine Nachbearbeitung dahingehend, daß der exakt rechtwinklige Verlauf der Stirnwandebenen gewährleistet ist, was in jedem Falle zusätzlichen Bearbeitungsaufwand mit sich bringt.

Bei der Montage des Motors ist es nicht nur erforderlich, die drei den Stator bildenden Elemente exakt koaxial auszurichten, sondern es müssen diese auch azimutal genau orientiert sein, damit die Zuganker durch die Haltebohrungen hindurchgesteckt werden können.

Für den Fall, daß der Motor gegen Umwelteinflüsse, z.B. agressive Gase oder Flüssigkeiten geschützt werden muß, ist es erforderlich, zumindest die Statorbleche miteinander zu verkleben und auch für eine hermetische Abdichtung zwischen den Stirnwandteilen und dem Statorkern Sorge zu tragen. Andernfalls muß ein den Motor vollständig umhüllendes und gegen dieses abzudichtendes Blech- oder Kunststoffgehäuse vorgesehen werden. Der hiermit verknüpfte Aufwand ist in jedem Fall erheblich und mit zusätzlichen Herstellungskosten verbunden.

Aufgabe der Erfindung ist es daher, einen Elektromotor der eingangs genannten Art anzugeben, der, unbeschadet der geforderten funktionellen Eigenschaften und Zuverlässigkeit erheblich preisgünstiger herstellbar sowie einfacher montierbar ist und im Bedarfsfall mit nur geringem Zusatzaufwand auch wirksam gegen Korrosionseinflüsse geschützt werden kann.

Diese Aufgabe wird, entsprechend dem Grundgedanken der Erfindung, durch die kennzeichnenden Merkmale des Patentanspruchs 1 gelöst.

Hierdurch werden zumindest die folgenden fertigungstechnischen und funktionellen Vorteile erzielt:

Das den Statorkern, die von diesem getragenen Feldspulen sowie die Lagerschale für das eine, innere Rotorlager außenseitig umspannende Kunststoff-Mantelteil ist in einer einfach gestalteten zweiteiligen Spritzgußform mit hoher Präzision hinsichtlich der exakt koaxialen Ausrichtung des Statorkerns und der Lagerachse rationell fertigbar, wobei durch den Spritzgußprozeß gleichsam schon die Montage der inneren Lagerschale am Stator des Motors erfolgt.

Die weitere "Fertig"-Montage des Motors kann auf einfache Weise dadurch erfolgen, daß eine vormontierte Einheit, die schon in der für den fertig montierten Motor vorgesehenen Konfiguration den permanent-magnetisierten Funktionsteil des Rotors, dessen inneres Wälzlager sowie dessen äußeres Wälzlager und die dieses aufnehmende äußere Lagerschale umfaßt, in den inneren, im wesentlichen rotationssymmetrisch gestalteten Aufnahmeraum des insgesamt topfförmigen Statorteils, das außenseitig durch das Kunststoffteil umspannt ist, eingesetzt wird. Die für diese Art der Montage erforderliche Ausbildung des inneren Wälzlagers als Loslager, dessen äußerer Lagerring eine geführte axiale Verschiebbarkeit des Rotors in der inneren Lagerschale vermittelt, ermöglicht auch - kleinhubige - axiale Relativbewegungen des Rotors gegenüber dem Stator, die aufgrund unterschiedlicher thermischer Längenänderungen des Rotors und des Kunststoffteils des Stators auftreten können.

Bedingt durch die Herstellung des den geblechten Statorkern, die von diesem getragenen Feldspulen sowie die eine, innere Lagerschale außerhalb des Stator-Innenraumes ummantelnden Kunststoffteils als Spritzgußteil, das durch Ausspritzen des Formhohlraumes einer zweiteiligen Spritzgußform geschaffen wird, in deren geschlossenem Zustand der die Feldspulen tragende Statorkern und die außenseitig zu umspritzende - innere - Lagerschale in bezüglich der gemeinsamen zentralen Längsachse exakt zentrierter Anordnung formschlüssig fixiert sind, ist dies auch der Fall, nachdem das Kunststoffteil gespritzt ist.

Durch die Formgebung dieses Kunststoffteils ist auch gewährleistet ist, daß die bei der Endmontage in das Kunststoffteil einzusteckende äußere Lagerschale nur in bezüglich der zentralen Längsachse exakt zentrierter Anordnung in den das Kunststoffteil, den Statorkern und die innere Lagerschale umfassenden Teil des Stators des Motors eingesteckt werden kann, dem nach der Endmontage auch diese äußere Lagerschale zuzurechnen ist. Für diese exakte Zentrierung, die Voraussetzung dafür ist, daß der Motor mit möglichst geringer Luftspaltweite zwischen Statorkern und Rotor realisierbar ist, als typischer Wert hierfür seien 2/100mm genannt, kommt es bei dem erfindungsgemäßen Motor daher nicht darauf an, daß die durch die endständigen Statorbleche markierten Stirnflächen des Statorkerns exakt eben sind, insbesondere nicht im radial äußeren Bereich des Statorkerns, wo aufgrund der üblichen Stanzpakettierung geblechter Kerne insbesondere bei den endständigen Statorblechen am ehesten Unebenheiten zu erwarten wären. Bei dem erfindungsgemäßen Motor ist es nicht erforderlich, im radial äußeren Bereich seines Statorkerns für Plan-Parallelität der Stirnflächen des Statorkerns zu sorgen, so daß diesbezüglich erforderliche Arbeitsgänge, die zeit- und kostenaufwendig wären, entfallen. Die hierdurch erzielbare Reduzierung der Herstellungskosten für den erfindungsgemäßen Motor wird als erheblich angesehen.

Es kommt hinzu, daß das Kunststoffteil durch seine stoffschlüssige Verbindung mit den von ihm formschlüssig ummantelten Elementen des Stators des Motors auch einen wirksamen Schutz dieser Elemente gegen korrosive Umgebungseinflüsse vermittelt und insoweit die Funktion eines gas- und flüssigkeitsdichten Gehäuseelements übernimmt. Ein Schutz des Motor-Innenraumes, in dem der Rotor angeordnet ist, gegen ein Eindringen korrosiver Medien erfordert gegenüber einer konventionellen Bauweise keine zusätzlichen Maßnahmen, da mit der Rotorwelle koppelbare Funktionselemente von Geräten oder Sensor-Elemente üblicherweise in diesen zugeordneten Gehäusen angeordnet sind, die an die jeweilige Stirnseite des Motors beziehungsweise bei dem erfindungsgemäßen Motor an endflanschförmige Bereiche des Kunststoffteils dicht ansetzbar sind. Diesbezüglich erforderliche, den Einsatzzweck des erfindungsgemäßen Motors berücksichtigende Gestaltungen des Kunststoffteils sind dem Fachmann bei Kenntnis ihres Zweckes ohne weiteres möglich.

Durch die gemäß Anspruch 2 vorgesehene Art der Abstützung der Lagerschalen an den inneren Randbereichen der Endstirnflächen des Statorkerns wird eine formschlüssig-stabile Konfiguration der Stator-Elemente errreicht, die bei der Herstellung des Kunststoffteils die stabile Lagerung des Kerns im Formhohlraum gewährleistet, wobei die äußere Lagerschale gleichsam durch einen Dornabschnitt des Formwerkzeuges ersetzt ist, und beim fertigen Motor dessen Stator eine hohe Stabilität verleiht.

Zweckmäßig für eine stabile Gestaltung des Stators ist auch dessen Gestaltung gemäß Anspruch 3 mit den Statorkern durchsetzenden Kunststoffbrücken, die stabile dickwandige flanschförmige Bereiche, die die Lagerschalen umschließen, miteinander verbinden. Die durch die Merkmale des Anspruchs 4 angegebene, für das Anmontieren des Motors an ein von diesem anzusteuerndes oder anzutreibendes Gerät zweckmäßige Gestaltung der äußeren Lagerschale hat in Kombination mit einem gemäß Anspruch 5 vorgesehenen, bevorzugt gemäß den Merkmalen des Anspruchs 6 angeordneten und genutzten Dichtring den Vorteil, daß das Gerätegehäuse gleichsam als Motordeckel genutzt wird, wobei die Ringdichtung die äußere Lagerschale zuverlässig in axial abgestützter Anlage mit dem Statorkern hält und somit das Gerätegehäuse einen dichtenden Abschluß des Motorinnenraumes vermittelt, der gemäß den Merkmalen des Anspruchs 7 dadurch komplettiert wird, das zusätzlich eine die Rotorwelle gegen die Lagerschale gleitfähig abdichtende Ringdichtung vorgesehen ist.

In bevorzugter Gestaltung des Motors ist vorgesehen, daß das von der äußeren Lagerschale aufgenommene Wälzlager als Festlager realisiert ist, derart, daß sein äußerer Lagerring dreh- und verschiebefest in der Lagerschale gehalten ist. Hierdurch wird die Montage des Motors vereinfacht, da die die Lagerschale und den Rotor einschließlich seiner Wälzlager umfassende Einheit separat vormontiert und in das durch das Kunststoffteil ummantelte Statorteil eingesteckt werden kann.

Die Lagerschalen können als einfach und preisgünstig herstellbare Drehteile gefertigt werden, was erheblich zu einer kostengünstigen Herstellbarkeit des Motors beiträgt.

Weitere Einzelheiten des erfindungsgemäßen Elektromotors ergeben sich aus der nachfolgenden Beschreibung eines speziellen Ausführungsbeispiels anhand der Zeichnung. Es zeigen:
- Fig. 1: einen erfindungsgemäßen kunststoff-ummantelten Elektromotor in schematisch vereinfachter Gesamtansicht, teilweise im Schnitt längs einer die Drehachse des Motors enthaltenden Radialebene und
- Fig. 2: eine vereinfachte Darstellung einer Spritzgußform zur Herstellung der Kunststoff-Ummantelung des Motors gemäß Fig. 1 in einer der Fig. 1 entsprechenden Schnittdarstellung, im unteren Teil der Fig. 2 nach dem Ausspritzen des Formhohlraumes.

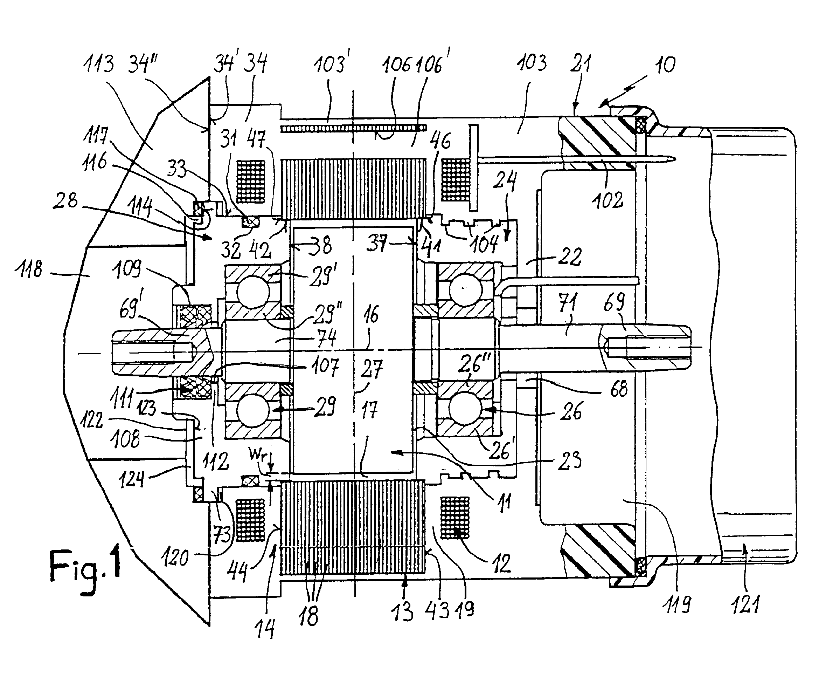

Für den in der Fig. 1 insgesamt mit 10 bezeichneten Elektromotor sei zum Zweck der Erläuterung vorausgesetzt, daß er zu dem Typenkreis von Motoren gehört, die einen permanent-magnetisierten Rotor 11 haben, sowie einen eine Mehrzahl von Feldspulen 12, die auf einem weich-magnetischen Kern 13 sitzen, umfassenden, insgesamt mit 14 bezeichneten Stator haben, der den Rotor 11 in koaxialer Anordnung mit dessen Drehachse 16, der zentralen Längsachse des Motors, vollständig umschließt, wobei die Feldspulen 12 axialsymmetrisch um die zentrale Achse des Motors 10 gruppiert sind; die durch Bestromung der Feldspulen 12 als Nutzfelder zur Drehmomententfaltung des Motors erzeugbaren Magnetfelder sind radial gerichtet; desgleichen sind die statischen Feldkomponenten der permanentmagnetischen Rotorelemente, durch deren Wechselwirkung mit den durch Bestromung der Feldspulen erzeugten Felder die Drehmomententfaltung des Motors zustande kommt, radial gerichtet; der ringzylindrische Luftspalt 17, der zwischen dem Stator 14 und dem Rotor 11 verbleibt, hat eine geringe radiale lichte Weite wᵣ, die, abweichend von der zur Erläuterung gewählten Darstellung, einen Betrag von nur etwa 2 bis 3/100mm hat.

Des weiteren ist der die Feldspulen 12 tragende Kern 13 zur Unterdrückung von Wirbelstromverlusten als vielschichtiges Paket dünner Bleche 18 realisiert, die durch "Stanzpaketieren" kraft-formschlüssig derart miteinander verbunden sind, daß sie, gesehen in Richtung der Drehachse 16 weder, radial noch azimutal gegeneinander verschiebbar sind und auch in Richtung der Drehachse 16 mit einer Mindestkraft aneinander haften, wobei diese Bleche 18 auf dem weitaus überwiegenden Bereich ihrer aneinander anliegenden großflächigen ebenen Begrenzungsflächen, sei es durch eine Oberflächenbeschichtung, sei es durch zwischen den Blechen angeordnete Klebeschichten vernachlässigbarer Dicke, elektrisch gegeneinander isoliert sind.

Der Kern 13 und die Feldspulen 12 des Stators 14 sind im Mantelbereich 19 eines insgesamt mit 21 bezeichneten Kunststoff-(Gehäuse-)Teils angeordnet, das, für sich gesehen, die Grundform eines Topfes hat, in dessen axial durch den Bodenbereich 22 des Kunststoffteils 21, radial durch innere Zylindermantelfächen des Mantelbereiches 19 des Kunststoffteils 21 sowie des Stators 13 berandeten Innenraum 23 der Rotor 11 beim Zusammenbau des Motors 10 einsteckbar ist.

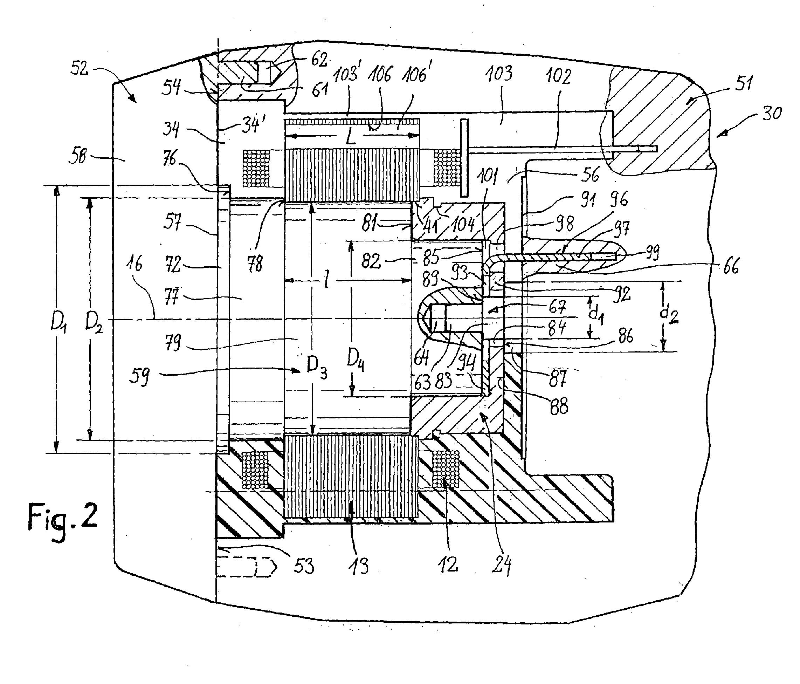

In das Kunstoff-Gehäuseteil 21 ist auch eine aus nicht-magnetisierbarem Material bestehende, "innere" Lagerschale 24 gleichsam integriert, die zur - mechanisch stabilen - Aufnahme eines Radialkugellagers 26 dient, mittels dessen der Rotor 11 in unmittelbarer Nähe des Bodenbereiches 22 des Kunststoff-Gehäuses 21 drehbar gelagert ist. Diese Lagerschale 24 wird bei der Herstellung des Kunststoffteils 21 gleichsam als "verlorenes" Formelement der hierzu benutzten Spritzgußform 30 (Fig. 2) verwendet, das nach dem Spritzgießen des Kunststoffteils 21 an diesem verankert ist.

In einer bezüglich der Quermittelebene 27 des Statorkerns 13 zu der bodenseitigen inneren Lagerschale spiegelbildlichen Anordnung ist eine zusammen mit dem Rotor 11 in den Innenraum 23 des Gehäuseteils 21 einsteckbare äußere Lagerschale 28 vorgesehen, von der wiederum ein Radialkugellager 29 aufgenommen ist, mittels dessen der Rotor 11 an der dem Bodenbereich 22 des Kunststoffgehäuseteils 21 gegenüberliegenden, äußeren Seite des Stators 14, drehbar gelagert ist.

Diese äußere Lagerschale 28 bildet einen Gehäusedeckel, der, nachdem der Rotor 11 in das den Stator 14 enthaltende Gehäuseteil 21 eingesetzt ist, den Innenraum 23 nach außen hin gas- und flüssigkeitsdicht abschließt. Die diesbezügliche Abdichtung vermittelt ein Dichtring 31, der in eine radial äußere Ringnut 32 der äußeren Lagerschale 28 eingesetzt ist und zwischen deren Nutgrund und der zylindrischen inneren Mantelfläche 33 eines dickwandigen End-Stirnflansches 34 des Kunststoff-Gehäuseteils 21 radial eingespannt ist.

Bei dem zur Erläuterung dargestellten Elektromotor 10 sind sowohl die innere Lagerschale 24 als auch die äußere Lagerschale 28 als flach-topfförmige, bezüglich der zentralen Achse 16 rotationssymmetrische Drehteile ausgebildet, deren aufeinander zuweisend angeordnete Mantelbereiche parallel zueinander und rechtwinklig zur zentralen Längsachse 16 verlaufende ringförmige, freie Endstirnflächen 37 bzw. 38 haben, deren Außenradius dem Innenradius des insgesamt ringzylindrischen Statorkerns 13 entspricht. An diese kreisringförmigen Endstirnflächen 37 und 38 der Lagerschalen-Mantelteile schließen sich in axialer Richtung schmale zylindrische radial äußere Stützflächen 41 und 42 der Lagerschalen 24 bzw. 26 an, an denen der Statorkern 13 mit seinen jeweils von seiner Mittelebene 27 entfernt angeordneten, schmalen, nur wenige der Kern-Bleche 18 umfassenden Endabschnitten radial abgestützt ist.

An diese schmalen zylindrischen Stützflächen 41 und 42 schließen rechtwinklig in radialer Richtung schmale äußere Ringstufen 46 und 47 der inneren Lagerschale 24 bzw. der äußeren Lagerschale 28 an, an denen der Statorkern 13 mit entsprechend schmalen, radial inneren Randbereichen seiner ringförmigen Endstirnflächen 43 und 44 axial abgestützt ist.

Die radiale Breite dieser ringförmigen Stützbereiche hat in typischen Fällen Werte zwischen 0,5 und 2 mm.

Durch diesen sowohl in axialer wie auch in radialer Richtung formschlüssigen Eingriff der in sich stabilen Lagerschalen 24 und 28 mit dem wiederum in sich stabilen Statorkern 13 ergibt sich insgesamt eine hohe mechanische Stabilität des Stators 14, dessen Kunststoffteil 21 lediglich dazu dient, den Statorkern 13 und die Lagerschalen 24 und 28 in ihrer wechselseitigen Eingriffs-Position zu halten, ohne daß das Kunststoffteil 21 selbst nennenswerte mechanische Belastungen auffangen muß.

Die zur Herstellung des Kunststoff-Gehäuseteils 21 vorgesehene Spritzgußform 30 umfaßt in der aus der Fig. 2 ersichtlichen, einfachen Gestaltung eine "Außen"-Formhälfte 51 und eine "Innen"-Formhälfte 52, die in einem nicht dargestellten Schließsystem einer Spritzgußmaschine, mit ebenen Stirnflächen 53 bzw. 54 aneinander anliegend, zu denen die zentrale Achse 16 des Form-Hohlraumes 56 im geschlossenen Zustand der Spritzgußform senkrecht verläuft, mit der für das Ausspritzen des Form-Hohlraumes 56 erforderlichen Schließkraft aneinander andrückbar sind.

Die Außenform 51 ist im wesentlichen topf-förmig gestaltet und bestimmt, abgesehen von der kreisringförmigen Endstirnfläche 34', deren Verlauf durch die Trennebene 57 der Formhälften 51 und 52 bestimmt ist, die äußere, "sichtseitige" Form des Kunststoff-Mantelteils 21, nachdem dieses gespritzt ist.

Die "Innen"-Formhälfte 52 hat einen stabilen, flanschförmigen Grundkörper 58, von dessen ebener Stirnfläche 54, mit deren äußerem Randbereich die Innen-Formhälfte 52 im geschlossenen Zustand der Form an der Gegen-Stirnfläche 53 der Außen-Formhälfte 51 anliegt, ein mehrfach gestufter, insgesamt mit 59 bezeichneter rotationssymmetrischer Dorn ausgeht, der zusammen mit der inneren Lagerschale 24 des inneren Radialkugellagers 26 des Motors 10 im wesentlichen die Innenform des Kunststoff-Mantelteils 21 bestimmt.

Die genaue Zentrierung der beiden Formhälften 51 und 52 bezüglich ihrer im zusammengesetzten Zustand gemeinsamen zentralen Längsachse 16 vermitteln zum einen axialsymmetrisch bezüglich der zentralen Längsachse angeordnete äußere Zentrierzapfen 61 der Innen-Formhälfte 52, die beim Schließen der Spritzgußform 30 mit in der entsprechenden Symmetrie angeordneten Zentrierbohrungen 62 der Außen-Formhälfte 51 in formschlüssigen Eingriff gelangen und zum anderen ein zentraler Zentrierzapfen 63 der Außen-Formhälfte 51 durch seinen formschlüssigen Eingriff mit einer zentralen Zentrierbohrung 64 der Innen-Formhälfte 52, wobei diese letztgenannten Zentrierelemente 63 und 64 der beiden Formhälften 51 und 52 koaxial bezüglich der zentralen Längsachse 16 der Spritzgußform 30 angeordnet sind. Der zentrale Zentrierzapfen 63 der Außen-Formhälfte 51 ist seinerseits der innere, dem Durchmesser nach kleinste Endabschnitt eines mehrfach gestuften, vom Bodenbereich 66 der insgesamt topfförmigen Außen-Formhälfte 51 ausgehenden, insgesamt mit 67 bezeichneten Dorns, der zur Aussparung der zentralen Öffnung 68 (Fig. 1) des Bodenbereichs 22 des Kunststoff-Mantelteils 21 dient, durch die ein freier Endabschnitt 69 der insgesamt mit 71 bezeichneten Rotorwelle hindurchtritt, der zur mechanischen Kopplung mit nicht eigens dargestellten federelastischen Rückstell-Elementen und/oder auslenkungs-begrenzenden Anschlagelementen nutzbar ist, die je nach Verwendungszweck des Motors 10 in einem an dessen Kunststoff-Mantelteil 21 ansetzbaren, "separaten", vom Standard abweichenden Kunststoffteil untergebracht sein können.

Der rotationssymmetrische Dorn 59 der Innen-Formhälfte 52 hat einen von deren flanschförmigem Grundkörper 58 ausgehenden, in axialer Richtung nur wenig, z.B. einige Millimeter, vorspringenden Basisabschnitt 72, innerhalb dessen der Dorn 59 seinen größten Durchmesser D₁ hat, dem der Außendurchmesser eines Zentrierflansches 73 der äußeren Lagerschale 28 entspricht, die das äußere Radialkugellager 29 aufnimmt, mittels dessen der Rotor 11 mit dem abtriebsseitigen Abschnitt 74 der Rotorwelle 71 im Bereich des End-Stirnflansches 34 des Kunststoff-Gehäuseteils 21 drehbar gelagert ist, nachdem der Motor 10 montiert ist.

Der Basisabschnitt 72 schließt über eine radial schmale, ebene Ringstirnfläche 76 (Fig. 2) an einen basisnahen Dornabschnitt 77 an, dessen Durchmesser D₂ dem Innendurchmesser der inneren Mantelfläche 33 (Fig. 1) des End-Stirnflansches 34 des Kunststoffteils 21 entspricht, das innerhalb dieses Endstirnflansches 34 mittels des Dichtringes 31 gegen die Lagerschale 28 des äußeren Kugellagers 29 abdichtbar ist. Der basisnahe Dornabschnitt 77 schließt wiederum über eine radial schmale, ebene Ringstirnfläche 78, mit der die schmale äußere Ringstufe 47 der äußeren Lagerschale 28 korrespondiert, an einen "tragenden" Mittelabschnitt 79 an, der beim Spritzen des Kunststoffteils 21 den Kern 13 des Stators 14 zentrierend trägt. Der Durchmesser D₃ dieses Mittelabschnitts 79 des Dorns 59 entspricht dem Durchmesser der inneren, kreiszylindrischen Hüllfläche des Statorkerns 13. Die axiale Länge I des Dorn-Mittelabschnitts 79 ist nur geringfügig, d.h. um die axiale Ausdehnung der zylindrischen, radial äußeren Stützfläche 41 der inneren Lagerschale 24 geringer als die axiale Ausdehnung L des Statorkerns 13.

Der Mittelabschnitt 79 des Dorns 59 geht über eine ebene, rechtwinklig zur zentralen Achse 16 verlaufende Ringstirnfläche 81, mit der die ringförmige Endstirnfläche 37 der inneren Lagerschale 24 korrespondiert, in einen inneren Endabschnitt 82 des Dorns 59 über, der mit der zentralen Zentrierbohrung 64 versehen ist, die im zusammengesetzten Zustand der Spritzgußform 30 den zentralen Zentrierzapfen 63 der Außenformhälfte 51 aufnimmt. Der Durchmesser D₄ dieses Dorn-Endabschnittes 82 entspricht dem Innendurchmesser der inneren Lagerschale 24, die im montierten Zustand des Motors 10 dessen inneres Kugellager 26 aufnimmt.

An den zentralen Zentrierzapfen 63 des Dorns 67 der Außen-Formhälfte 51 schließt ein in axialer Richtung kurzer zylindrischer Stützabschnitt 83 an, dessen Durchmesser d₁ signifikant, d.h. um das 1,5- bis 2-fache größer ist als der Durchmesser des Zentrierzapfens 63 und auch etwas größer als der Durchmesser des freien Endabschnittes 69 der Rotorwelle 71, mit dem diese in dem inneren Kugellager 26 des Motors 10 gelagert ist. Der Durchmesser d₁ ist etwas kleiner, z.B. um 20 bis 50%, als der Durchmesser der zentralen, kreisrunden Bodenöffnung 84 der topfhülsenförmigen inneren Lagerschale 24, die beim Gießen des Kunststoffkörpers 21 denjenigen Teil der Innen-Formhälfte 52 bildet, der die Innenfläche des Bodenbereiches 22 des Kunststoffteils 21 formt.

An den "inneren" zylindrischen Stützabschnitt 83 des Dorns schließt über eine ebene, rechtwinklig zur zentralen Achse 16 verlaufende Ringstirnfläche 86 ein "äußerer" Stützabschnitt 87 des Dorns 67 der Außenformhälfte 51 an, dessen Durchmesser d₂ etwas, z.B. um 20 bis 40%, größer ist als der lichte Durchmesser der von dem inneren Stützabschnitt 83 zentral durchsetzten Bodenöffnung 84 der inneren Lagerschale 24. Im geschlossen Zustand der Spritzgußform 30 ist die Lagerschale 24 des inneren Kugellagers 26 mit dem radial inneren Randbereich ihrer "äußeren" zum Bodenbereich 66 der Außenformhälfte 51 hinweisenden, ebenen Bodenfläche 88 an der schmalen

Ringstirnfläche 86 des äußeren Stützabschnittes 87 des Dorns 67 der Außen-Formhälfte 51 axial abgestützt. Des weiteren ist in dieser Konfiguration der innere Endabschnitt 82 des Dorns 59 der Innenformhälfte 52 mit seiner ebenen Ringstirnfläche 85 innerhalb der Lagerschale 24 an der radial schmalen Ringstirnfläche 89 axial abgestützt, über die der innere Stützabschnitt 83 des Dorns 67 der Außenformhälfte 51 an den Zentrierzapfen 63 anschließt.

Der äußere Stützabschnitt 87 des Dorns 67 der Außenformhälfte 51 geht von der ebenen, rechtwinklig zur zentralen Achse verlaufenden Ringstirnfläche 91 des Bodenbereiches 66 der Außfenformhälfte 51 aus, der mit dieser Ringstirnfläche 91 die äußere Form des Bodenbereiches 22 des Kunststoff-teils 21 bestimmt, d.h. die axiale Ausdehnung des äußeren Stützabschnittes 87 entspricht der axialen Dicke des Bodenbereiches 22 des Kunststoffteils 21.

Die axiale Ausdehnung des inneren Stützabschnittes 83 ist bei dem zur Erläuterung dargestellten Ausführungsbeispiel etwas größer als die axiale Dikke des Bodens 92 der Lagerschale 24, so daß zwischen diesem und der benachbarten Ringstimfläche 85 des inneren Endabschnitts 82 des Dorns 59 der Innen-Formhälfte 52 ein Ringspalt 93 verbleibt, der zur Aufnahme eines ringscheibenförmigen Verankerungsteils 94 eines in der Längsschnittdarstellung der Fig. 2 L-förmigen Einlegeteils 96 nutzbar ist, das einen z.B. flachstabförmigen in radialem Abstand von der zentralen Längsachse 16 angeordneten und parallel zu dieser verlaufenden Schenkel 97 hat, der durch eine radial äußere Bodenöffnung 98 der Lagerschale 24 austritt, in einen zu seinem Querschnitt komplementären Schlitz 99 des Bodenbereiches 66 der Außen-Formhälfte 51 hineinragt und nach dem Spritzen des Kunststoffteils 21 in dessen Bodenbereich 22 eingespritzt ist, wobei, bedingt durch die Form des Verankerungsteils 94 des Einlegeteils 96 auch ein radial äußerer Bereich 101 des Ringspalts 93, der innerhalb der Lagerschale 24 zwischen deren Boden 92 und dem inneren Endabschnitt 82 des Dorns 59 der Innen-Formhälfte 52 verbleibt, mit Kunststoff ausgespritzt wird.

Herstellungstechnisch gesehen ist dieses Einlegeteil 96 Bestandteil der Außenformhälfte 52, der als Bestandteil auch die Lagerschale 24 zuzurechnen ist.

Der Innenformhälfte 52 zuzurechnen sind der Statorkern 13, die an diesem schon vormontiert angeordneten Feldspulen 12, die innere Lagerschale 24 sowie ebenfalls als Einlegeteile ausgebildete, in den Fig. 1 und 2 lediglich schematisch angedeutete Kontaktelemente 102, die, nachdem das Kunststoffteil 21 gespritzt ist, aus dessen Mantelbereich 103 axial herausragen, analog zu dem Einlegeteil 96, das aus dem Bodenbereich 22 des fertig gespritzten Kunststoffteils 21 axial herausragt.

Die innere Lagerschale 24 ist mit einer Ringnuten 104 versehen, durch deren Verfüllung mit dem in den Formhohlraum eingespritzten Kunststoff-Material eine zusätzliche formschlüssige Verankerung der inneren Lagerschale 24 an dem Kunststoffteil 21 erzielt wird.

Der Statorkern 13 ist in seinem radial äußeren Bereich mit Kanälen 106 versehen, in denen an das in den Form-Hohlraum eingespritzte Kunststoffmaterial stabförmige Brücken bildet, die den dickwandigen Endstirnflansch 34, der im fertig montierten Zustand des Motors 10 dessen äußere Lagerschale 24 umschließt, mit dem dickwandigen Mantelbereich 103 des Kunststoff-Mantelteils 21 verbinden, der die radial äußere Umhüllung der inneren Lagerschale 24 bildet und an den Bodenbereich 22 des Kunststoffteils 21 anschließt, der die axial äußere Umhüllung der inneren Lagerschale 24 bildet. Die Kanäle 106 sind zweckmäßigerweise axialsymmetrisch bezüglich der zentralen Achse 16 und parallel zu dieser verlaufend angeordnet. Die stabförmigen Kunststoffbrücken 106' vermitteln eine mechanisch stabile Verbindung des dickwandigen Endstirnflansches 34 mit dem dickwandigen Mantelbereich 103, so daß ein sich zwischen dem Endstirnflansch 34 und dem dickwandigen Mantelbereich 103 erstreckender, den Statorkern 13 radial außen umhüllender Außenhaut-Bereich 103' des Kunststoff-Mantelteils 21 relativ dünnwandig gehalten werden kann.

Eine rationelle Montage des Motors 10 ist in der Weise möglich, daß der Rotor 11, die mit diesem fest verbundene Rotorwelle 71, das innere Radialkugellager 26, das äußere Radialkugellager 29 und die äußere Lagerschale 28 zu einer vormontierten Baugruppe zusammengesetzt werden, wobei das äußere Kugellager 29 als "Fest"-Lager genutzt wird, dessen äußerer Lagerring 29' dreh- und verschiebefest in die äußere Lagerschale 28 eingesetzt ist, und dessen innerer Lagerring 29" dreh- und verschiebefest mit der Rotorwelle 71 verbunden ist, und diese Baugruppe in den Innenraum 23 des Stators so eingesteckt wird, daß sich die aus der Fig. 1 ersichtliche Konfiguration ergibt. Zweckmäßig ist es hierbei, wenn auch der innere Lagerring 26" des inneren Kugellagers 26 dreh- und verschiebefest mit der Rotorwelle 21 verbunden ist, so daß dieses innere Kugellager 26 nur bezüglich der inneren Lagerschale 24 als verschiebbares "Los"-Lager genutzt wird, wobei jedoch die innere Lagerschale 24 zweckmäßigerweise so eng toleriert ist, daß der äußere Lagerring 26' des inneren Kugellagers 26 im montierten Zustand des Motors 10 reibungsschlüssig in der inneren Lagerschale gehalten ist.

Von dem abtriebsseitigen Abschnitt 74 der Rotorwelle 71, auf dem drehfest der innere Lagerring 29" des von der äußeren Lagerschale 28 aufgenommenen äußeren Kugellagers 29 sitzt, geht ein geringfügig schlankerer Kupplungs-Endabschnitt 69' aus, der durch eine zentrale Öffnung 107 des Bodens 108 der äußeren Lagerschale 28 hindurchtritt und in einem dieser Bodenöffnung 107 benachbarten, radial erweiterten Öffnungsbereich 109 des Bodens 108 der Lagerschale mittels einer Ringdichtungs-Anordnung 111, die bei dem zur Erläuterung gewählten Anordnungsbeispiel 2 axial benachbart angeordnete Lippendichtungen umfaßt, gas- und flüssigkeitsdicht gleitfähig gegenüber dem Boden 108 der äußeren Lagerschale 28 abgedichtet ist.

Die zentrale, bezüglich der zentralen Längsachse 16 des Motors 10 konzentrische - kreisrunde - Öffnung 107 des Bodens 108 der äußeren Lagerschale 28 hat einen lichten Durchmesser, der nur geringfügig größer ist als der Durchmesser des durch sie hindurchtretenden Kupplungsabschnittes 69' der Rotorwelle 71, jedoch signifikant kleiner als der Innendurchmesser des erweiterten Bohrungsbereichs 109, von dem die Ringdichtungsanordnung 111 aufgenommen ist. Sie ist an einem in axialer Richtung dünnwandigen Stützsteg 112 des Bodens 108 der äußeren Lagerschale 28 angeordnet. Dieser Stützsteg 112, der die axial innere Abstützung der Ringdichtungsanordnung 111 bildet, ist von dem radial inneren Lagerring 29" des äußeren Kugellagers 29 in einem axialen Abstand angeordnet und radial so weit ausgedehnt, daß der innere Lagerring 29" nicht im Reibungskontakt mit dem Boden 108 der äußeren Lagerschale 28 steht.

Der Zentrierflansch 73 der äußeren Lagerschale 28, dessen Außendurchmesser abgesehen von einem kleinen Untermaß, das die Montage des Motors erleichtert, demjenigen (D1) des Basisabschnitts 72 des Dorns 59 der Innenform 52 (Fig. 2) entspricht, dient zum einen als Montagehilfe für das zentrierte Ansetzen des Motors 10 an das in der Fig. 1 lediglich schematisch angedeutete Gehäuse 113 eines mittels des Motors 10 gesteuerten Geräts, z.B. eines Drehschieberventils, und bildet zum anderen mit seiner äußeren, ebenen Ringstirnfläche 114 die einseitige axiale Begrenzung eines im übrigen durch das Gehäuse 113 begrenzten Ringspalts 116, in den ein z.B. als Rundschnurring ausgebildeter Dichtring 117 eingesetzt ist, der eine radial äußere Abdichtung des Innenraumes 118 des Gehäuses gegen den Umgebungsraum vermittelt. In der dargestellten Montage-Konfiguration des Motors 10 und des Gehäuses 113 ist dieses mit einer ebenen Endstirnfläche 34" an der Endstirnfläche 34' des Endstirnflansches 34 in Anlage gehalten und hierbei der Dichtring 117 soweit zusammengedrückt, daß seine - axiale - elastische Vorspannung ausreicht, die mit dem Rotor 11 verschiebefest verbundene äußere Lagerschale 28 in Anlage ihrer schmalen radial äußeren Ringstufe 47 mit der äußeren, schmalen Ringstirnfläche 78 des Statorkerns 13 zu halten, wie in der Fig. 1 dargestellt.

Die äußere Lagerschale 28 ist hinsichtlich der Tolerierung ihrer Abmessungen so gestaltet, daß ihre Zentrierung bezüglich der zentralen Längsachse 16 des Motors 10 ausschließlich durch die - spielfreie - Anlage ihrer zylindrischen radial äußeren Stützfläche 42 an der inneren - zylindrischen - Innenfläche des Statorkerns 13 markiert ist. Abweichend von der Darstellung der Fig. 1 kann der - annähernd - den Durchmessern D₂ des basisnahen Dornabschnitts 77 entsprechende Außendurchmesser des Mantels der äußeren Lagerschale 28 geringfügig kleiner sein als der lichte Durchmesser der zylindrischen Innenmantelfläche 33 des Endstirnflansches 34 des Kunstsoff-Teils 21, wobei dieser geringfügige, das Einstecken der vormontierten Rotor-Baueinheit in den Stator-Bereich erleichternde Unterschied durch den Dichtring 31, der unter einer Vorspannung steht ausgeglichen wird. Desgleichen ist der Außendurchmesser des "Zentrier"-Flansches 73 der äußeren Lagerschale 28, der an seiner dem Gehäuse 113 zugewandten Seite den unter Vorspannung stehenden Dichtring 117 axial stützt, geringfügig kleiner als der Durchmesser D₁ des Basisabschnitts 72 des Dorns 59 der Innenformhälfte 52. Desweiteren ist der axiale Abstand des Zentrierflansches 73 von der schmalen äußeren Ringstufe 47 der äußeren Lagerschale 28 geringfügig größer als die axiale Ausdehnung der zylindrischen inneren Mantelfläche 33 des Endstirnflansches 34 des Kunststoffteils 21, so daß zwischen dem Zentrierflansch 73 und der diesem benachbarten schmalen Ringstirnfläche des Kunststoffteils 21 ein enger Ringspalt 120 verbleibt, wenn die äußere Lagerschale mit ihrer schmalen äußeren Ringstufe 47 in Anlage mit dem radial inneren Bereich der Stirnfläche 44 des Statorkerns 13 gehalten ist. Desweiteren hat das Gehäuse 113 eine flach-ringförmige axiale Vertiefung 122, die zusammen mit der äußeren freien Ringstirnfläche 123 der äußeren Lägerschale 28 einen flachen Ringspalt 124 begrenzt, der den Freiraum für geringfügige axiale Verschiebungen des Motors 10 insgesamt ergibt, die durch thermische Ausdehnung und/oder Kontraktionsbewegungen des Kunststoff-teils 21 bedingt sein können.

Auch die Zentrierung der inneren Lagerschale 24 bezüglich der zentralen Achse 16 ist durch die Anlage ihrer zylindrischen radialen äußeren Stützfläche 41 an der zylindrischen inneren Mantelfläche des Stators 13 bestimmt, wobei jedoch die innere Lagerschale 24 mit Preßsitz in den Stator 13 eingefügt und mit diesem dadurch kraft-formschlüssig fest verbunden ist. Die Vorspannung des Dichtringes 117 reicht aus, um die äußere Lagerschale 28 und mit dieser den Rotor 11 in Anlage mit der äußeren Endstirnfläche 44 des Statorkerns 13 zu halten. Hierbei kommt es nicht darauf an, daß diese Anlage flächig ist, da, bedingt durch die Herstellung des Kunststoff-Teils 21 jegliche Unebenheiten der Stirnflächen gleichsam ausgeglichen werden. Aufgrund dieser Art der Zentrierung des Rotors 11 bezüglich 11 des Stators kann der Luftspalt 17 zwischen Rotor- und Stator sehr eng gehalten werden, was einem hohen Wirkungsgrad des Motors zu gute kommt.

Ein Schutz des Motor-Innenraumes 23 gegen Zustrom eines korrosiven Gases über die zentrale Öffnung 68 des Bodens 22 des Kunststoffteils 21 ist in praxi dadurch gegeben, daß der durch den Boden 22 des Kunststoffteils gegen den Motor-Innenraum abgegrenzte, im übrigen durch den Mantelbereich 103 des Kunststoffteils begrenzte "Gehäuse"-Bereich 119, von dem elektrische Steckverbindungs- und elektronische Steuerungselemente aufgenommen sind, durch einen schematisch angedeuteten Gehäusedeckel 121 gasdicht geschlossen ist.

## Patentansprüche

1. Elektromotor (10), dessen Rotor (11) in zwei jeweils einseitig von einem die Feldspulen (12) tragenden, magnetisch weichen, "geblechten" Statorkern (13) angeordneten Wälzlagern (26 und 29) drehbar gelagert ist, die von der Grundform nach zylindrisch-topfförmigen Lagerschalen (24 bzw. 28) aufgenommen sind, die aus mechanisch festem Material bestehen und durch formschlüssig-zentrierenden Eingriff mit dem Statorkern und axiale Abstützung an diesem in definiertem Abstand voneinander am Stator (14) festlegbar sind, wobei der Außendurchmesser (D₄) des äußeren Lagerringes mindestens eines der Wälzlager (26 und/oder 29), der von einem ringzylindrischen Mantelbereich der zugeordneten Lagerschale umschlossen ist, kleiner ist als der radiale lichte Durchmesser (D₃) einer die innere Einhüllende des Statorkerns (13) bildenden Zylindermantelfläche, **gekennzeichnet durch** die folgenden Merkmale:
a) Diejenige Lagerschale (24 oder 28) oder eine der beiden Lagerschalen, deren Mantel-Innendurchmesser (D₄) kleiner ist als der lichte Innendurchmesser (D₃) des Statorkerns (13) ist zusammen mit dem Kern und den von diesem getragenen Feldspulen (12) außenseitig von einem als einstückiges Spritzgußteil ausgebildeten Kunststoff-Mantelteil (21) umschlossen, das, abgesehen von einem radial inneren, schmalen Randbereich (78) der äußeren Ringstirnfläche (44) des Statorkerns (13) und abgesehen von einem radial schmalen zentralen Ringflächenbereich der äußeren Ringstirnfläche (88) des Bodens (92) der in das Kunststoffteil (21) eingegossenen Lagerschale (24), diese und den Statorkern außenseitig umschließt und die Feldspulen (12) vollständig aufnimmt.
b) die das Gegenlager (29) zu dem von der ummantelten inneren Lagerschale (24) aufgenommenen Rotorlager (26) aufnehmende äußere Lagerschale (28) ist innerhalb einer bohrungsförmigen, kreiszylindrisch berandeten zentralen Öffnung des Kunststoff-Mantelteils, deren Durchmesser (D₂) geringfügig größer ist als der Innendurchmesser (D₃) des außen ummantelten Kerns (13) des Stators (14), mittels einer Ringdichtung (31) gegen das Kunststoff-Mantelteil (21) abgedichtet;
c) das von der kunststoff-ummantelten, inneren Lagerschale (24) aufgenommene Wälzlager (26) ist als Loslager ausgebildet, dessen äußerer Lagerring (34) eine geführte axiale Verschiebbarkeit des Rotors (11) in der inneren Lagerschale (24) vermittelt.

2. Elektromotor nach Anspruch 1, **dadurch gekennzeichnet, daß** der Kern (13) im inneren Randbereich seiner Endstirnflächen (42 und 43) axial an schmalen äußeren Ringstirnflächen (46 und 47) und radial an zylindrischen, radial äußeren, an die Ringstufen (46 und 47) anschließenden zylindrischen Stützflächen (41 und 42) der Lagerschalen (24 und 28) abstützbar ist.

3. Elektromotor nach Anspruch 1 oder Anspruch 2, **dadurch gekennzeichnet, daß** der die Feldspulen (12) tragende Statorkern (13) in seinem radial äußeren Bereich mit durchgehenden, an seinen Stirnflächen (43 und 44) mündenden Kanälen (106) versehen ist, in denen das eingespritzte Kunststoff-Material stabförmige Brücken bildet, die einen dickwandigen Endstirnflansch (34) der innenseitig die Aufnahmeöffnung für die einsteckbare äußere Lagerschale (28) berandet, mit einem dickwandigen Mantelbereich (103) des Kunststoff-Mantelteils (21) verbinden, der die radial äußere Umhüllung der das Loslager (26) enthaltenden Lagerschale (24) bildet und an einen Bodenbereich (22) des Kunststoffteils (21) anschließt, der die axial äußere Umhüllung der inneren Lagerschale (24) bildet.

4. Elektromotor nach einem der Ansprüche 1 bis 3, **dadurch gekennzeichnet, daß** die in das Kunststoffteil (21) einsteckbare äußere Lagerschale (28) einen aus der zentralen Öffnung des Kunststoffteils herausragenden, bodenseitigen Zentrierabschnitt (73) hat, mittels dessen der Motor (10) formschlüssig zentriert an ein Gehäuseteil (113) eines mittels des Motors ansteuerbaren Schalt- oder Regelungsgeräts ansetzbar ist.

5. Elektromotor nach Anspruch 4, **dadurch gekennzeichnet, daß** eine äußere Ringdichtung (117) vorgesehen ist, die eine Abdichtung der äußeren Lagerschale (28) gegenüber dem an das Kunststoffteil (21) des Motors (10) anmontierten Gehäuseteil (113) vermittelt.

6. Elektromotor nach Anspruch 5, **dadurch gekennzeichnet, daß** die Ringdichtung (117) unter axialer Vorspannung stehend zwischen den einander gegenüberliegenden Dichtflächen des Gehäuseteils (113) und der äußeren Lagerschale (28) des Motors angeordnet ist.

7. Elektromotor nach einem der Ansprüche 4 bis 6, **dadurch gekennzeichnet, daß** ein zur Betätigung des Schalt- oder Regelungsgeräts dienender abtriebsseitiger Abschnitt (74) der Rotorwelle (71), der durch eine zentrale Öffnung (107) der äußeren Lagerschale (28) hindurchtritt, mittels einer Ringdichtung (111) gegen die Lagerschale (28) gleitfähig abgedichtet ist.

8. Elektromotor nach einem der Ansprüche 1 bis 7, **dadurch gekennzeichnet, daß** das von der äußeren Lagerschale (28) aufgenommene Wälzlager (29) als Festlager ausgebildet ist, dessen äußerer Lagerring (29') dreh- und verschiebefest in die Lagerschale (28) eingesetzt ist.

9. Elektromotor nach einem der Ansprüche 1 bis 8, **dadurch gekennzeichnet, daß** die Lagerschalen (24 und 28) als rotationssymmetrische Drehteile ausgebildet sind, die vorzugsweise aus einem nichtmagnetisierbaren Material bestehen.
